# EUROPÄISCHE PATENTSCHRIFT

(11) **EP 4 001 239 B1**
(45) Veröffentlichungstag und Bekanntmachung des Hinweises auf die Patenterteilung: **07.05.2025**
(21) Anmeldenummer: 20208095.8
(22) Anmeldetag: 17.11.2020
(51) Int. Cl.: C04B 28/06

(54) **TROCKENMÖRTELMISCHUNG ZUR HERSTELLUNG EINES DRAINAGEMÖRTELS UND VERFAHREN UNTER VERWENDUNG DIESER TROCKENMÖRTELMISCHUNG**
DRY MORTAR COMPOSITION FOR MAKING A DRAINAGE MORTAR AND METHOD USING THIS DRY MORTAR COMPOSITION
MÉLANGE DE MORTIER SEC DESTINÉ À LA FABRICATION D'UN MORTIER DE DRAINAGE ET PROCÉDÉ UTILISANT LEDIT MÉLANGE DE MORTIER SEC

(43) Veröffentlichungstag der Anmeldung: 25.05.2022
(73) Patentinhaber: Sievert Baustoffe SE & Co. KG, 49090 Osnabrück (DE)
(72) Erfinder: Imeri, Endrit, 49565 Bramsche (DE); Kanig, Martin, 49565 Bramsche (DE); Fooken, Michael, 49076 Osnabrück (DE); Twyhues, Michael, 49219 Glandorf (DE)
(74) Vertreter: Deters, Frank

(56) Entgegenhaltungen:
- EP-A1- 3 015 438
- EP-A1- 3 597 616
- EP-A2- 2 664 597
- CN-A- 106 007 587
- CN-A- 106 220 216
- DE-A1- 4 135 144
- DE-U1- 202004 011 888
- FR-A1- 3 094 712
- KR-B1- 102 002 354
- KR-B1- 102 075 632
- US-A- 4 488 909
- US-A1- 2017 088 465
- "Ullmann's Encyclopedia of Industrial Chemistry", vol. 11, 15 July 2010, WILEY-VCH, Weinheim, ISBN: 978-3-527-30673-2, article HERMANN LUTZ: "Dry Mortars", pages: 541 - 580, XP093168613, DOI: 10.1002/14356007.f16_f01.pub2

## Beschreibung

Die Erfindung betrifft eine Trockenmörtelmischung zur Herstellung eines Drainagemörtels sowie ein Verfahren zur Herstellung einer gepflasterten Fläche in gebundener Bauweise unter Verwendung dieses Drainagemörtels.

DE 20 2004 011888 U1 offenbart zur Herstellung eines Drainagemörtels die Zugabe von nur so viel Wasser zu einer Trockenmischung mit Zementgehalt 250-350 kg/m3 und Zuschlag (z. B. Splitt mit einer Sieblinie von 2 bis 5 mm bzw. 5 bis 11 mm oder Rundkorn mit einer Sieblinie von 4 bis 8 mm), dass eine erdfeuchte Konsistenz erhalten wird. Die Wasserdurchlässigkeit wird hierbei durch den niedrigen Zementgehalt und durch die Verwendung von so genannten "Einkorn-Sieblinien" (d. h. es fehlt der Feinkornanteil und die Sieblinie des verwendeten Zuschlags sollte möglichst eng begrenzt sein) erreicht. Alternativ kann als wasserdurchlässiger Mörtel ein werksseitig vorgemischter Drainagemörtel (z.B. Sopro BM 610 oder Baumix Pflasterdrainagemörtel) eingesetzt werden, die sich ebenfalls durch den verwendeten "Einkornzuschlag" auszeichnen.

Im Außenbereich werden Flächen, die mit Pflastersteinen oder auch Platten befestigt sind, aktuell mit zwei unterschiedlichen Techniken erstellt. In beiden Fällen wird zunächst ein fester Untergrund geschaffen, bei dem beispielsweise ein Schotterbett verdichtet wird. Anschließend unterscheiden sich die weiteren Bauweisen. In einer als ungebundene Bauweise benannten Technik wird auf den verfestigten Untergrund eine Schicht aus Splitt oder aus Sand aufgebracht. Die Pflastersteine oder Platten werden dann auf diesen losen Untergrund aufgelegt und positioniert. Der Zwischenraum zwischen den Pflastersteinen oder den Platten wird in der Regel mit einem Füllsplitt oder mit Füllsand aufgefüllt. Für die gleichmäßige Verteilung des Splitts auf dem Untergrund und für das gleichmäßige Auflegen der Pflastersteine oder Platten wird keine Maschine benötigt, so dass der Aufwand für diese Arbeitstechnik eher gering ist. Im Gegensatz dazu wird bei der gebundenen Bauweise auf dem festen Untergrund ein Mörtelbett aus Drainagemörtel erstellt. Hierzu wird der Drainagemörtel maschinell angerührt und auf dem festen Untergrund gleichmäßig verteilt. Anschließend werden Pflastersteine oder auch Platten im noch nicht erhärteten Drainagemörtel verlegt. Nach Aushärten des Drainagemörtels, der auch als Bettungsmörtel bezeichnet wird, wird der Bereich zwischen den Pflastersteinen oder den Platten in der Regel mit einem Fugenmörtel auf Epoxidharzbasis oder zementärer Bindemittelbasis verfüllt. Für die gebundene Bauweise ist in der Regel eine Mischvorrichtung vor Ort erforderlich, um den Drainagemörtel anzurühren. Dieses Anrühren ist in der Praxis zeitaufwendig und umständlich.

Der Erfindung liegt die Aufgabe zugrunde, eine Trockenmörtelmischung zur Herstellung eines Drainagemörtels für gepflasterte Flächen in gebundener Bauweise bereitzustellen, die einfach zu verarbeiten ist, sowie ein Verfahren zur Herstellung einer derartigen gepflasterten Fläche in gebundener Bauweise unter Verwendung dieser Trockenmörtelmischung anzubieten.

Die Erfindung wird durch eine Trockenmörtelmischung zur Herstellung eines Drainagemörtels mit den Merkmalen des Patentanspruchs 1 sowie durch ein Verfahren zur Herstellung einer gepflasterten Fläche in gebundener Bauweise mit den Merkmalen des Patentanspruchs 10 gelöst. Weitere vorteilhafte Ausgestaltungen der Erfindung sind in den Unteransprüchen 2 bis 9 und 11 bis 16 aufgeführt. Das Verfahren und die Trockenmörtelmischung sind speziell aufeinander abgestimmt, so dass diese nachfolgend gemeinsam erläutert werden.

Zur Herstellung einer gepflasterten Fläche in gebundener Bauweise wird die erfindungsgemäße Trockenmörtelmischung im ersten Verfahrensschritt in trockener Form auf einem festen, wasserdurchlässigen Untergrund gleichmäßig verteilt. Im Gegensatz zum Stand der Technik wird also nicht die Trockenmörtelmischung im ersten Schritt mit Wasser zu einem Mörtel angerührt, der dann im durchfeuchteten Zustand mit gewünschtem Wassergehalt auf den festen Untergrund aufgebracht wird. Eine Mischmaschine zur Herstellung eines durchfeuchteten Mörtels aus einer Trockenmörtelmischung entfällt dadurch auf der Baustelle.

Anschließend werden im erfindungsgemäßen Verfahren Pflastersteine oder Platten auf die trockene Trockenmörtelmischung dergestalt aufgelegt und optional in die Trockenmörtelmischung hineingedrückt, dass die Oberseiten der Steine oder Platten in einer Pflasterfläche gleichmäßig hoch sind. Die dergestalt vorbereitete Pflasterfläche wird danach gleichmäßig mit einem Feinsprühnebel mit einer Teilwassermenge von 1,2 bis 2,0 l/m² besprüht. Hier setzt nun die spezielle Zusammensetzung der erfindungsgemäßen Trockenmörtelmischung an. Diese enthält 20 bis 40 Gew.-% einer Bindemittelmischung, 1 bis 5 Gew.-% hydrophile, inerte Fasern, optional 0 bis 40 Gew.-% weitere Zuschlagstoffe und Gesteinskörnung bis zum Erreichen von 100 Gew.-%, d.h., dass die vorgenannten Komponenten in Summe 100 Gew.-% ergeben. In der Bindemittelmischung sind bezogen auf die Trockenmörtelmischung enthalten:
- 1 bis 10 Gew.-% einer ersten Bindemittelkomponente bestehend aus amorphem CSA-Zement,
- 0,1 bis 5 Gew.-% Branntkalk als zweite Bindemittelkomponente,
- 5 bis 15 Gew.-% Tonerdezement als dritte Bindemittelkomponente und
- 1 bis 15 Gew.-% CEM I R-Zement als vierte Bindemittelkomponente.

Der Feinsprühnebel dringt nun durch Fugen und Spalten zwischen den Pflastersteinen oder Platten bis zu der darunter befindlichen Schicht der Trockenmörtelmischung vor. Dadurch, dass nur eine geringe Teilwassermenge und diese zudem sehr behutsam in Form eines Feinsprühnebels aufgebracht wird, dringt das Wasser nur sehr langsam in die Trockenmörtelmischung ein. Die Wasserzugabe führt in einer ersten Stufe der Verfestigung dazu, dass der CSA-Zement sehr schnell mit dem Branntkalk und dem zugegebenen Wasser reagiert. Es entsteht eine Schutzverfestigung an der Oberseite der Trockenmörtelmischung, insbesondere im Bereich, der unmittelbar von durch Fugen oder Spalten zwischen den Pflastersteinen oder Platten eindringendem Wasser als erstes erreichbar ist. Ein amorpher CSA-Zement ist ein sehr schnell reagierender Zement auf Basis von Calcium-Sulfo-Aluminat. Durch das Vorhandensein der zweiten Bindemittelkomponente wird die Reaktionsgeschwindigkeit des amorphen CSA-Zements noch einmal beschleunigt. Ergänzend zum amorphen CSA-Zement kann ein amorpher CA-Zement (Calcium-Aluminat) verwendet werden, der mit Schwefeltrioxid versetzt ist. Nach Aufbringen des Feinsprühnebels wird eine Zeitspanne von wenigstens 8 Minuten abgewartet, innerhalb derer die Trockenmörtelmischung unterhalb der Pflasterfläche durch den Feinsprühnebel eine Schutzverfestigung erhält. Anschließend wird die Pflasterfläche mit einer Hauptwassermenge von wenigsten 0,35 Litern pro Kilogramm verarbeiteter Trockenmörtelmischung versetzt. Die Hauptwassermenge dringt nun ebenfalls durch die Spalten und Fugen zwischen den Pflastersteinen oder Platten bis zur Trockenmörtelmischung vor, stößt dort jedoch auf die Schutzverfestigung der Mörtelmischung an deren Oberseite. Durch die in der Trockenmörtelmischung enthaltenen hydrophilen, inerten Fasern ist die Trockenmörtelmischung unterhalb der Pflastersteine oder Platten nicht in sich zusammengefallen, sondern weist eine in sich wasserdurchlässige Struktur auf. Die Hauptwassermenge kann nun langsam durch die Schutzverfestigung hindurch in tiefere Schichten der Trockenmörtelmischung eindringen und dort mit der Trockenmörtelmischung reagieren. Gleichzeitig verhindert die in der ersten Stufe hergestellte Schutzverfestigung, dass die Hauptwassermenge zu schnell in die Trockenmörtelmischung eindringt und Partikel aus der Trockenmörtelmischung in Richtung des Untergrunds mitreißt. Stattdessen dringt die Hauptwassermenge langsam in die Trockenmörtelmischung ein und setzt dort die Abbindereaktionen beginnend mit der ersten Stufe der Verfestigung, der Reaktion des amorphen CSA-Zements und ggf. des mit Schwefeltrioxid versetzten, amorphen CA-Zements mit dem Branntkalk als zweiter Bindemittelkomponente und dem Wasser fort. Die Trockenmörtelmischung wird zunehmend durch langsam nachdringendes weiteres Hauptwasser durchsetzt, so dass zunehmend der Tonerdezement als dritte Bindemittelkomponente mit dem Branntkalk als zweiter Bindemittelkomponente und dem Wasser in einer zweiten Abbindungsstufe reagiert. Diese zweite Abbindungsstufe sorgt dafür, dass die Pflasterfläche schnell begehbar ist. In einer dritten Stufe der Verfestigung sorgt dann der CEM I R-Zement als vierte Bindemittelkomponente in dessen Reaktion mit der Hauptwassermenge dafür, dass die gewünschte Endfestigkeit erreicht wird. CEM I R-Zemente sind bekannt. Das R steht für rapid (schnell) und bildet eine Untergruppe der CEM I Zemente, die besonders schnell abbinden. Besonders bevorzugt wird hierbei ein CEM I 52,5 R oder ein CEM I 42,5 R-Zement gemäß EN 197-1 verwendet. Diese haben sich als besonders geeignet in der Bindemittelmischung und in dem angedachten Verfahren herausgestellt.

Durch die erfindungsgemäße Trockenmörtelmischung und das erfindungsgemäße Verfahren kann somit eine gepflasterte Fläche in gebundener Bauweise aus einer Trockenmörtelmischung hergestellt werden, ohne dass eine Mischmaschine zur Herstellung eines durchfeuchteten Mörtels vor Aufbringen auf den festen Untergrund auf der Baustelle vorhanden sein muss. In internen Versuchen hat sich zudem gezeigt, dass bei Weglassen der Verfahrensschritte c) und d) und Verwendung einer herkömmlichen Trockenmörtelmischung zur Herstellung eines Drainagemörtels keine zufriedenstellenden Ergebnisse generiert werden konnten. Erst dadurch, dass die drei vorgenannten Stufen der Verfestigung der Mörtelmischung zeitlich dergestalt nacheinander ablaufen, dass die erste Stufe sehr schnell reagiert, die zweite Stufe langsamer als die erste Stufe, jedoch schneller als die dritte Stufe und die dritte Stufe langsamer als die erste Stufe und auch langsamer als die zweite Stufe, wobei jedoch selbstverständlich bereits eine nachfolgende Abbindestufe mit der Reaktion starten kann, bevor eine vorhergehende Stufe vollständig zu Ende reagiert hat, wird eine gepflasterte Fläche in gebundener Bauweise erhalten, deren Endfestigkeit mit der Endfestigkeit herkömmlich hergestellter Pflasterflächen in gebundener Bauweise vergleichbar ist.

Die erste Bindemittelkomponente ist bezogen auf die Trockenmörtelmischung mit Vorteil in einem Anteil von 7 bis 8 Gew.-% enthalten. Besonders bevorzugt beträgt das Verhältnis des Calciumoxids zum Aluminiumoxid in der ersten Bindemittelkomponente 1,5 zu 1 bis 1,9 zu 1 insbesondere 1,6 zu 1 bis 1,8 zu 1. Die vorgenannten Anteile in der ersten Bindemittelkomponente haben sich als besonders vorteilhaft für die mit der Trockenmörtelmischung gewünschten Anwendung herausgestellt.

In einer besonders bevorzugten Ausgestaltung der Erfindung ist die zweite Bindemittelkomponente Branntkalk in einem Anteil von 1,5 bis 2,5 Gew.-% bezogen auf die Trockenmörtelmischung enthalten. Dieser enge Bereich hat sich als besonders vorteilhaft für die mit der Trockenmörtelmischung vorgesehene Verwendung herausgestellt.

Mit Vorteil ist Tonerdezement als dritte Bindemittelkomponente in einem Anteil von 12 bis 14 Gew.-% bezogen auf die Trockenmörtelmischung enthalten. Unabhängig hiervon enthält der Tonerdezement bevorzugt Calciumoxid und Aluminium-III-Oxid in äquimolarer Menge mit einer Abweichung von bis zu +/- 10%. Unter einem Tonerdezement wird im Sinne dieser Erfindung ein Tonerdezement entsprechend der Norm EN 14647 verstanden. Diese Anteile und Mengenverhältnisse haben sich jeweils unabhängig voneinander als besonders geeignet für die angedachte Verwendung der Trockenmörtelmischung herausgestellt.

In einer besonders bevorzugten Ausgestaltung der Erfindung ist die vierte Bindemittelkomponente in einem Anteil von 5 bis 10 Gew.-% bezogen auf die Trockenmörtelmischung enthalten. Dieser enge Bereich hat sich als besonders vorteilhaft in der für die Trockenmörtelmischung angedachten Verwendung herausgestellt.

In einer besonders bevorzugten Ausgestaltung der Erfindung ist die Trockenmörtelmischung außer den vier vorgenannten Bindemittelkomponenten frei von weiteren Bindemitteln. Unabhängig hiervon ist die Trockenmörtelmischung mit Vorteil frei von Abbindeverzögerern. Die erfindungsgemäße Trockenmörtelmischung und das erfindungsgemäße Verfahren, in dem eine derartige Trockenmörtelmischung verwendet wird, sind speziell aufeinander abgestimmt, wobei weitere Bindemittel als die genannten Bindemittelkomponenten und unabhängig hiervon Abbindeverzögerer die gewünschte Wirkung der abgestuften Verfestigung der Trockenmörtelmischung in drei im Wesentlichen nacheinander ablaufenden Stufen nachteilig beeinflussen würden. Derartige Abbindeverzögerer sind beispielsweise organische Fruchtsäuren oder auch wasserhaltige oder wasserfreie Calciumsulfate, wie Gips oder Anhydrit.

In einer besonders bevorzugten Ausgestaltung der Erfindung sind in der Trockenmörtelmischung 10 bis 20 Gew.-% Leichtzuschlagstoffe gemäß EN 13055 enthalten. Hierdurch ist die Trockenmörtelmischung einfacher zu verarbeiten, ohne nachteilige Wirkung auf die Endfestigkeit der mit der Trockenmörtelmischung hergestellten Pflasterfläche. Zudem erhöht dieser Leichtzuschlag die Wasserdurchlässigkeit des damit hergestellten Drainagemörtels und hindert zudem kleinteilige Partikel daran, mit eintretendem Wasser in Richtung Untergrund transportiert zu werden. Besonders bevorzugt wird hierbei als Leichtzuschlag Bims oder gebrochener Blähton eingesetzt. Diese beiden Komponenten sind offenporig. Die Oberfläche von Bims oder auch gebrochenem Blähton ist rau, wodurch feine Bindemittelpartikel angelagert und eingelagert werden und dadurch zum einen daran gehindert werden aus der Trockenmörtelmischung herausgespült zu werden und zum anderen eine der Drainagewirkung förderliche Mikrostruktur entsteht.

In einer besonders bevorzugten Ausgestaltung der Erfindung wird die Pflasterfläche im Schritt c) des erfindungsgemäßen Verfahrens mit einem Feinsprühnebel mit einer Wassermenge von 1,4 bis 1,8 l/m², insbesondere 1,5 bis 1,7 l/m² besprüht. Unabhängig hiervon weist der Feinsprühnebel besonders bevorzugt eine mittlere Tröpfchengröße von 0,03 mm bis 0,10 mm auf. Diese Ausgestaltungen des Verfahrens haben sich überraschenderweise jeweils unabhängig voneinander als besonders geeignet herausgestellt, um die schnelle Ausbildung einer Schutzverfestigung an der Oberseite der Trockenmörtelmischung im Rahmen der ersten Verfestigungsstufe zu erreichen und gleichzeitig ein Ausschwemmen der in der Trockenmörtelmischung enthaltenden Partikel zu verhindern.

In einer vorteilhaften Ausgestaltung der Erfindung wird die Trockenmörtelmischung im Schritt a) mit einer Dicke von 5 bis 7 cm ohne eine Verdichtung aufgebracht. Ohne Verdichtung bedeutet im Sinne dieser Erfindung, dass die im Schritt a) aufgebrachte Trockenmörtelmischung nicht anschließend beispielsweise mit einer Rüttelmaschine komprimiert und verfestigt wird, sondern dass stattdessen unmittelbar im Schritt b) Pflastersteine oder Platten auf die Trockenmörtelmischung aufgelegt werden. Selbstverständlich wird durch diesen Schritt b) die Trockenmörtelmischung etwas komprimiert und verfestigt.

Die im Schritt b) verarbeiteten Pflastersteine oder Platten werden besonders bevorzugt an deren Aufsetzflächen auf die Trockenmörtelmischung mit einer Haftschlämme benetzt, bevor diese auf die Trockenmörtelmischung aufgesetzt werden. Die Haftschlämme sorgt für eine gute Verbindung zwischen den Pflastersteinen oder Platten einerseits und der Mörtelmischung andererseits. Die Pflastersteine oder Platten werden unabhängig hiervon im Schritt b) besonders bevorzugt dergestalt nebeneinander positioniert, dass eine offene Fuge um jeden Pflasterstein herum verbleibt, die im Schritt e) zumindest einmal sichtbar mit Wasser bis zur Oberkante der Pflastersteine oder Platten gefüllt wird. Besonders bevorzugt werden die offenen Fugen um jeden Pflasterstein oder jede Platte mehr als einmal sichtbar mit Wasser bis zur Oberkante der Pflastersteine oder Platten gefüllt. Das in den Fugen stehende Wasser dringt dann langsam durch die Schutzverfestigung der Trockenmörtelmischung in diese ein und reagiert dann langsam nach und nach mit der darunter befindlichen Trockenmörtelmischung ohne in relevantem Umfang Partikel der Trockenmörtelmischung in Richtung Untergrund mitzureißen. Unabhängig hiervon wird eine um jeden Pflasterstein oder jede Platte herum verbleibende offene Fuge besonders bevorzugt mit einem Fugenfüllmaterial, insbesondere einem Fugenmörtel auf Epoxidharzbasis oder zementärer Bindemittelbasis verfüllt, nachdem die Pflasterfläche hergestellt und mit dem Wasser in den Schritten c) und e) versetzt worden ist. Das Füllmaterial stabilisiert die gepflasterte Fläche zusätzlich.

In einer besonders bevorzugten Ausgestaltung der Erfindung werden die hydrophilen, inerten Fasern von Basalt- oder Glasfasern gebildet. Mit Vorteil haben die Basalt- oder Glasfasern dabei eine Länge von 4 bis 8 mm. Diese Ausgestaltungen haben sich in der Trockenmörtelmischung als besonders geeignet im Hinblick auf die angedachte Verwendung in dem erfindungsgemäßen Verfahren herausgestellt.

In einer besonders bevorzugten Ausgestaltung des Verfahrens wird im Schritt d) eine Zeitspanne von wenigstens 10 Minuten abgewartet, bevor das Verfahren mit dem Schritt e) fortgesetzt wird. Die erwünschte Schutzverfestigung der Oberseite der aufgebrachten Trockenmörtelmischung in den Bereichen unterhalb der Fugen und Spalten zwischen den Pflastersteinen oder Platten kann sich dadurch auch bei niedrigeren Temperaturen in ausreichendem Maße ausbilden.

Unter einer Trockenmörtelmischung wird im Sinne dieser Erfindung eine Mischung aus Bindemitteln, Gesteinskörnung und gegebenenfalls Zusatzstoffen verstanden. Diese Mischung wird dann in der Verarbeitung mit Wasser versetzt, so dass sich ein Mörtel ergibt, der dann aushärtet.

In einer besonders bevorzugten Ausgestaltung der Erfindung wird während der Schritte b) bis d) kein weiteres Wasser auf die Pflasterfläche aufgebracht. Hierdurch kann sich zunächst besonders gut die erwünschte Schutzverfestigung an der Oberseite der Trockenmörtelmischung ausbilden.

### Ausführungsbeispiel der Erfindung

Ein fester, wasserdurchlässiger Untergrund in Form einer verfestigten Schotterfläche wird erstellt. Die erfindungsgemäße Trockenmörtelmischung wird in trockener Form auf diesen Untergrund aufgebracht und gleichmäßig in einer Dicke von 6 cm verteilt. Die erfindungsgemäße Trockenmörtelmischung enthält dabei 7 Gew.-% amorphen CSA-Zement, 2 Gew.-% Branntkalk, 13 Gew.-% Tonerdezement, 8 Gew.-% CEM I 52,5 R-Zement, 15 Gew.-% Bims und Gesteinskörnung mit einer Körnung von 1,25 bis 2,5 mm bis zum Erreichen von 100 Gew.-%. Die Trockenmörtelmischung wird dabei nicht verdichtet. Pflastersteine werden mit deren Aufsetzfläche auf die Trockenmörtelmischung in einer Haftschlämme eingetaucht und dadurch benetzt. Anschließend werden die Steine auf die trockene Trockenmörtelmischung (Bettungsschicht) aufgesetzt und in die Trockenmörtelmischung bis zur gewünschten Höhe mit Hilfe eines Gummihammers eingedrückt. Die Trockenmörtelmischung wird hierbei verdichtet. Zwischen den einzelnen Pflastersteinen verbleibt hierbei ein offener Spalt (Fuge). Mit einem Feinsprühnebel aus Wasser wird die Oberfläche besprüht. Hierbei wird eine Teilwassermenge von 1,2 bis 2,0 l/m² aufgebracht. Der Wassereintrag ist dabei so gering und vorsichtig aufgebracht, dass keine feinteiligen Bestandteile der Trockenmörtelmischung ausgeschwemmt werden. Es wird eine Zeitspanne von 10 Minuten abgewartet, innerhalb derer die Trockenmörtelmischung unterhalb der Pflasterfläche durch den Feinsprühnebel eine Schutzverfestigung erhält. Anschließend wird die Hauptwassermenge mit einem Volumen von 0,35 Litern pro Kilogramm verarbeiteter Trockenmörtelmischung durch Ausgießen von Wassereimern und/oder mittels Gartenschlauch ohne scharfen Strahl auf die vorbereitete Pflasterfläche aufgebracht, bis die Fugen sichtbar mit Wasser bis zur Pflastersteinoberkante gefüllt sind. Dieser hydrostatische Druck in der Fuge begünstigt eine vertikale und horizontale Benetzung der gesamten Bettungsschicht. Nach 30 Minuten wird die Pflasterfläche nochmal mit Wasser benässt, um sicherzustellen, dass die Bettungsschicht ausreichend mit Wasser für eine vollständige hydraulische Abbindung versorgt ist. Es zeigte sich, dass die so hergestellte Fläche nach 24 Stunden (bei einer Umgebungstemperatur von 20°C) belastbar ist. Die Fugen der Pflasterfläche werden anschließend mit einem wasserdurchlässigen Fugenmörtel auf Epoxidharzbasis verfüllt.

## Patentansprüche

1. Trockenmörtelmischung zur Herstellung eines Drainagemörtels enthaltend:
- 20 bis 40 Gew.-% einer Bindemittelmischung,
- 1 bis 5 Gew.-% hydrophile, inerte Fasern,
- optional 0 bis 40 Gew.-% weitere Zuschlagstoffe und
- Gesteinskörnung bis zum Erreichen von 100 Gew.-%,
wobei in der Bindemittelmischung bezogen auf die Trockenmörtelmischung enthalten sind:
- 1 bis 10 Gew.-% einer ersten Bindemittelkomponente bestehend aus amorphem CSA-Zement,
- 0,1 bis 5 Gew.-% Branntkalk als zweite Bindemittelkomponente,
- 5 bis 15 Gew.-% Tonerdezement als dritte Bindemittelkomponente und
- 1 bis 15 Gew.-% CEM I R-Zement als vierte Bindemittelkomponente.

2. Trockenmörtelmischung nach Anspruch 1, **dadurch gekennzeichnet, dass** die erste Bindemittelkomponente bezogen auf die Trockenmörtelmischung in einem Anteil von 7 bis 8 Gew.-% enthalten ist.

3. Trockenmörtelmischung nach einem der vorhergehenden Ansprüche, **dadurch gekennzeichnet, dass** in der ersten Bindemittelkomponente das Verhältnis des Calciumoxids zum Aluminiumoxid jeweils 1,5 zu 1 bis 1,9 zu 1, insbesondere 1,6 zu 1 bis 1,8 zu 1 beträgt.

4. Trockenmörtelmischung nach einem der vorhergehenden Ansprüche, **dadurch gekennzeichnet, dass** die zweite Bindemittelkomponente in einem Anteil von 1,5 bis 2,5 Gew.-% bezogen auf die Trockenmörtelmischung enthalten ist.

5. Trockenmörtelmischung nach einem der vorhergehenden Ansprüche, **dadurch gekennzeichnet, dass** Tonerdezement in einem Anteil von 12 bis 14 Gew.-% bezogen auf die Trockenmörtelmischung enthalten ist.

6. Trockenmörtelmischung nach einem der vorhergehenden Ansprüche, **dadurch gekennzeichnet, dass** der Tonerdezement Calciumoxid und Aluminium-III-Oxid in äquimolarer Menge mit einer Abweichung von bis zu +/- 10 % enthält.

7. Trockenmörtelmischung nach einem der vorhergehenden Ansprüche, **dadurch gekennzeichnet, dass** die vierte Bindemittelkomponente in einem Anteil von 5 bis 10 Gew.-% bezogen auf die Trockenmörtelmischung enthalten ist.

8. Trockenmörtelmischung nach einem der vorhergehenden Ansprüche, **dadurch gekennzeichnet, dass** die Trockenmörtelmischung außer den vier Bindemittelkomponenten frei von weiteren Bindemitteln ist.

9. Trockenmörtelmischung nach einem der vorhergehenden Ansprüche, **dadurch gekennzeichnet, dass** die Trockenmörtelmischung frei von Abbindeverzögerern ist.

10. Verfahren zur Herstellung einer gepflasterten Fläche in gebundener Bauweise, bei dem
a) eine Trockenmörtelmischung nach einem der vorhergehenden Ansprüche in trockener Form auf einem festen, wasserdurchlässigen Untergrund gleichmäßig verteilt wird,
b) Pflastersteine oder Platten auf die trockene Trockenmörtelmischung dergestalt aufgelegt und an die Trockenmörtelmischung angedrückt werden, dass die Oberseiten der Steine oder Platten in einer Pflasterfläche gleichmäßig hoch sind,
c) die dergestalt vorbereitete Pflasterfläche gleichmäßig mit einem Feinsprühnebel mit einer Teilwassermenge von 1,2 bis 2,0 l/m² besprüht wird,
d) eine Zeitspanne von wenigstens 8 Minuten abgewartet wird innerhalb derer die Trockenmörtelmischung unterhalb der Pflasterfläche durch den Feinsprühnebel eine Schutzverfestigung erhält,
e) die Pflasterfläche mit einer Hauptwassermenge von wenigstens 0,35 Litern pro Kilogramm verarbeiteter Trockenmörtelmischung versetzt wird.

11. Verfahren nach Anspruch 10, **dadurch gekennzeichnet, dass** im Schritt c) die Pflasterfläche mit einem Feinsprühnebel mit einer Wassermenge von 1,4 bis 1,8 l/m², insbesondere 1,5 bis 1,7 l/m² besprüht wird.

12. Verfahren nach einem der Ansprüche 10 oder 11, **dadurch gekennzeichnet, dass** die Trockenmörtelmischung im Schritt a) mit einer Dicke von 5 bis 7 cm ohne Verdichtung aufgebracht wird.

13. Verfahren nach einem der Ansprüche 10 bis 12, **dadurch gekennzeichnet, dass** die im Schritt b) verarbeiteten Pflastersteine oder Platten an deren Aufsetzflächen auf die Trockenmörtelmischung mit einer Haftschlämme benetzt werden.

14. Verfahren nach einem der Ansprüche 10 bis 13, **dadurch gekennzeichnet, dass** die Pflastersteine oder Platten im Schritt b) dergestalt nebeneinander positioniert werden, dass eine offene Fuge um jeden Pflasterstein oder jede Platte herum verbleibt, die im Schritt e) zumindest einmal sichtbar mit Wasser bis zur Oberkante der Pflastersteine oder Platten gefüllt wird.

15. Verfahren nach einem der Ansprüche 10 bis 14, **dadurch gekennzeichnet, dass** der Feinsprühnebel eine mittlere Tröpfchengröße von 0,03 Millimetern bis 0,10 Millimetern aufweist.

16. Verfahren nach einem der Ansprüche 10 bis 15, **dadurch gekennzeichnet, dass** im Schritt d) eine Zeitspanne von wenigstens 10 Minuten abgewartet wird.

## Claims

1. Dry mortar mixture for the production of a drainage mortar containing:
- 20 to 40 wt.% of a binder mixture,
- 1 to 5 wt.% hydrophilic, inert fibers,
- optionally 0 to 40 wt.% other concrete aggregates and
- aggregate until 100 wt.% is reached,
wherein the binder mixture contains, based on the dry mortar mixture:
- 1 to 10 wt.% of a first binder component consisting of amorphous CSA cement,
- 0.1 to 5 wt.% of quicklime as a second binder component,
- 5 to 15 wt.% of alumina cement as the third binder component and
- 1 to 15 wt.% of CEM I R cement as the fourth binder component.

2. Dry mortar mixture according to claim 1, **characterized in that** the first binder component is contained in a proportion of 7 to 8 wt.% based on the dry mortar mixture.

3. Dry mortar mixture according to one of the preceding claims, **characterized in that** the ratio of calcium oxide to aluminium oxide in the first binder component is in each case 1.5 to 1 to 1.9 to 1, in particular 1.6 to 1 to 1.8 to 1.

4. Dry mortar mixture according to one of the preceding claims, **characterized in that** the second binder component is contained in a proportion of 1.5 to 2.5 wt.% based on the dry mortar mixture.

5. Dry mortar mixture according to one of the preceding claims, **characterized in that** alumina cement is contained in a proportion of 12 to 14 wt.% based on the dry mortar mixture.

6. Dry mortar mixture according to one of the preceding claims, **characterized in that** the alumina cement contains calcium oxide and aluminum III oxide in equimolar amounts with a deviation of up to +/- 10%.

7. Dry mortar mixture according to one of the preceding claims, **characterized in that** the fourth binder component is contained in a proportion of 5 to 10 wt.% based on the dry mortar mixture.

8. Dry mortar mixture according to one of the preceding claims, **characterized in that** the dry mortar mixture is free of further binders apart from the four binder components.

9. Dry mortar mixture according to one of the preceding claims, **characterized in that** the dry mortar mixture is free of setting retarders.

10. Process for producing a paved surface using the bound construction, in which
a) a dry mortar mixture according to one of the preceding claims is evenly distributed in dry form on a solid, water-permeable substrate,
b) paving stones or slabs are placed on the dry mortar mixture and pressed onto the dry mortar mixture in such a way that the tops of the stones or slabs in a paved surface are of uniform height,
c) the paved surface prepared in this way is evenly sprayed with a fine spray mist with a partial water quantity of 1.2 to 2.0 l/m²,
d) a period of at least 8 minutes is waited for during which the dry mortar mixture below the paved surface is given a protective hardening by the fine spray mist,
e) the paved surface is mixed with a main amount of water of at least 0.35 liters per kilogram of dry mortar mixture processed.

11. Process according to claim 10, **characterized in that** in step c) the paved surface is sprayed with a fine spray mist with a water quantity of 1.4 to 1.8 l/m², in particular 1.5 to 1.7 l/m².

12. Process according to one of claims 10 or 11, **characterized in that** the dry mortar mixture is applied in step a) with a thickness of 5 to 7 cm without compaction.

13. Process according to one of claims 10 to 12, **characterized in that** the paving stones or slabs processed in step b) are wetted with an adhesive slurry on their contact surfaces with the dry mortar mixture.

14. Process according to one of claims 10 to 13, **characterized in that** the paving stones or slabs are positioned next to one another in step b) in such a way that an open joint remains around each paving stone or slab, which is visibly filled with water up to the upper edge of the paving stones or slabs at least once in step e).

15. Process according to one of claims 10 to 14, **characterized in that** the fine spray mist has an average droplet size of 0.03 millimeters to 0.10 millimeters.

16. Process according to one of claims 10 to 15, **characterized in that** in step d) a period of at least 10 minutes is waited for.

## Revendications

1. Mélange de mortier sec pour la fabrication d'un mortier de drainage contenant :
- 20 à 40 % en poids d'un mélange de liants,
- 1 à 5 % en poids de fibres hydrophiles inertes,
- en option, 0 à 40 % en poids d'autres agrégats, et
- des grains de roche jusqu'à atteindre 100 % en poids,
où sont contenus dans le mélange de liants par rapport au mélange de mortier sec :
- 1 à 10 % en poids d'un premier composant de liant constitué de ciment CSA amorphe,
- 0,1 à 5 % en poids de chaux vive en tant que deuxième composant de liant,
- 5 à 15 % en poids de ciment alumineux en tant que troisième composant de liant, et
- 1 à 15 % en poids de ciment CEM I R en tant que quatrième composant de liant.

2. Mélange de mortier sec selon la revendication 1, **caractérisé en ce que** le premier composant de liant est contenu en une proportion de 7 à 8 % en poids par rapport au mélange de mortier sec.

3. Mélange de mortier sec selon l'une quelconque des revendications précédentes, **caractérisé en ce que**, dans le premier composant de liant, le rapport de l'oxyde de calcium à l'oxyde d'aluminium est respectivement de 1,5 sur 1 à 1,9 sur 1, notamment de 1,6 sur 1 à 1,8 sur 1.

4. Mélange de mortier sec selon l'une quelconque des revendications précédentes, **caractérisé en ce que** le deuxième composant de liant est contenu en une proportion de 1,5 à 2,5 % en poids par rapport au mélange de mortier sec.

5. Mélange de mortier sec selon l'une quelconque des revendications précédentes, **caractérisé en ce que** du ciment alumineux est contenu en une proportion de 12 à 14 % en poids par rapport au mélange de mortier sec.

6. Mélange de mortier sec selon l'une quelconque des revendications précédentes, **caractérisé en ce que** le ciment alumineux contient de l'oxyde de calcium et de l'oxyde d'aluminium III en quantités équimolaires avec une variation de jusqu'à +/- 10 %.

7. Mélange de mortier sec selon l'une quelconque des revendications précédentes, **caractérisé en ce que** le quatrième composant de liant est contenu en une proportion de 5 à 10 % en poids par rapport au mélange de mortier sec.

8. Mélange de mortier sec selon l'une quelconque des revendications précédentes, **caractérisé en ce que** le mélange de mortier sec est exempt d'autres liants que les quatre composants de liant.

9. Mélange de mortier sec selon l'une quelconque des revendications précédentes, **caractérisé en ce que** le mélange de mortier sec est exempt d'agents retardateurs de prise.

10. Procédé de fabrication d'une surface pavée en construction liée, selon lequel
a) un mélange de mortier sec selon l'une quelconque des revendications précédentes est réparti uniformément sous forme sèche sur un substrat solide, perméable à l'eau,
b) des pavés ou des dalles sont placés sur le mélange de mortier sec et pressés contre le mélange de mortier sec de telle sorte que les côtés supérieurs des pavés ou des dalles soient de hauteur uniforme dans une surface de pavage,
c) la surface de pavage ainsi préparée est aspergée uniformément d'une pulvérisation fine d'une quantité d'eau partielle de 1,2 à 2,0 l/m²,
d) on attend une durée d'au moins 8 minutes pendant laquelle le mélange de mortier sec sous la surface de pavage obtient une consolidation de protection par la pulvérisation fine,
e) la surface de pavage reçoit une quantité d'eau principale d'au moins 0,35 litre par kilogramme de mélange de mortier sec mis en œuvre.

11. Procédé selon la revendication 10, **caractérisé en ce que**, dans l'étape c), la surface de pavage est aspergée d'une pulvérisation fine d'une quantité d'eau de 1,4 à 1,8 l/m², notamment de 1,5 à 1,7 l/m².

12. Procédé selon l'une quelconque des revendications 10 ou 11, **caractérisé en ce que** le mélange de mortier sec est appliqué à l'étape a) avec une épaisseur de 5 à 7 cm sans compactage.

13. Procédé selon l'une quelconque des revendications 10 à 12, **caractérisé en ce que** les pavés ou dalles mis en œuvre à l'étape b) sont mouillés avec un coulis d'adhérence au niveau de leurs surfaces de pose sur le mélange de mortier sec.

14. Procédé selon l'une quelconque des revendications 10 à 13, **caractérisé en ce qu'**à l'étape b), les pavés ou dalles sont positionnés les uns à côté des autres de manière à laisser un joint ouvert autour de chaque pavé ou dalle, joint qui, à l'étape e), est rempli d'eau au moins une fois de manière visible jusqu'au bord supérieur des pavés ou dalles.

15. Procédé selon l'une quelconque des revendications 10 à 14, **caractérisé en ce que** la pulvérisation fine a une taille de gouttelettes moyenne de 0,03 millimètre à 0,10 millimètre.

16. Procédé selon l'une quelconque des revendications 10 à 15, **caractérisé en ce qu'**à l'étape d), on attend une durée d'au moins 10 minutes.
